# EUROPEAN PATENT APPLICATION

(11) **EP 1 852 887 A2**
(43) Date of publication of application: **07.11.2007**
(21) Application number: 07251572.9
(22) Date of filing: 12.04.2007
(51) Int. Cl.: H01J 17/49

(54) **Display device having display panel and method of disassembling the same**

(30) Priority: 20.04.2006 JP 2006116289
(71) Applicant: Fujitsu Hitachi Plasma Display Limited, Kunitomi-cho, 880-1194 Miyazaki Higashimorokata-gun (JP)
(72) Inventor: Kondo, Nobuyoshi, Miyazaki-ken, 880-1194 (JP); Sasaki, Takashi, Miyazaki-ken, 880-1194 (JP)
(74) Representative: Calderbank, Thomas Roger

(57) **Abstract**

For a flat panel display including a glass display panel and a chassis pasted together using an adhesive material, the present invention provides a low-cost and simple method of separating the panel from the chassis which are pasted together using the adhesive material. A conductor layer is formed on a surface of the panel on the adhesive material side using a thin film technique, thick film technique or the like, an adhesive interface which exists between the panel and adhesive material or between the chassis and adhesive material is directly heated and the panel is thereby easily separated from the chassis without using any special and expensive member.

## Description

The present invention relates to a flat panel display constructed of a flat panel mainly made of glass and a chassis or the like to which this panel is pasted and held, a structure of the device that facilitates separation between the two and a method therefor.

The development of various flat-type display devices is underway. A display section (panel) thereof is mainly made of glass and mounted on a chassis made of, for example, metal other than glass for the purpose of securing the strength and radiation or the like. On the other hand, in the case of disposal and/or disassembly, collection by type of material is becoming a requirement from the standpoint of environmental protection in recent years. In the case of collection by type of a flat panel display which is dealt with by the present invention, a large-sized display device with one side exceeding 1 m such as a plasma display in particular, the method of separating the panel from the chassis constitutes a big problem.

As one of techniques to solve this problem, Japanese Patent Laid-Open Publication No. 2002-123187 discloses a technique which puts a heat-generating body into an adhesive material, generates heat and causes the temperature of an adhesive layer to rise to thereby reduce adhesive strength. On the other hand, Japanese Patent Laid-Open Publication No. 2004-6172 discloses a structure which provides a heating coil which generates heat in a sealing member of a non-screen area of a plasma display panel.

However, in such a structure, a member having a special structure with a heat-generating body put in the adhesive material is necessary, which results in a cost increase of the member. Moreover, though it is a temperature rise of the adhesive material which exists on an interface between the adhesive material and the panel or chassis that is needed, this structure is not efficient in the sense that the heat-generating body which is a heating source is placed in the adhesive material of poor heat conductivity and the adhesive interface between the two is heated at the same time. On the other hand, the structure with the heating coil which generates heat provided in the sealing member of the non-screen area cannot produce sufficient heat-generating effects.

The means for solving the above described problems according to the present invention forms a conductive layer on the surface of a panel on an adhesive material side, causes this conductive layer to generate heat, thereby weakens the adhesive strength of an adhesive on an interface between the panel and the adhesive material and separates the panel from the chassis including the adhesive material.

A conductive layer is formed through a thin film technique such as vacuum evaporation and vacuum sputtering and a thick film technique of printing and burning of a conductor paste and a resistor paste or the like. These films have strong adhesion to glass, have strength as if they were integrated with glass, and can thereby be handled just in the same way as a case with a conventional panel as a single unit without the need to provide coating therefor. Moreover, in the case of a film made using the thick film technique, the surface is rough and adhesion to the adhesive material is good and it is also possible to obtain adhesive strength stronger than that in the case where the panel is directly pasted to the adhesive layer. Furthermore, since these films are generally thin, they can be provided with an arbitrary resistance value by selecting appropriate patterning and film thickness even in the case of a conductive material and can obtain an optimum resistance value, that is, heating characteristic.

For the flat panel display provided with such means, when heat generation becomes necessary to separate glass from the chassis in the event of disposal or the like, a current is applied to the conductive layer and heat is generated to thereby directly heat the adhesive material on the panel side and cause a temperature rise, and it is thereby possible to efficiently reduce the adhesive strength of the interface, that is, the adhesive and easily separate the panel from the chassis.

Furthermore, according to other means of the present invention which provides a heating sheet on the chassis side, even when the conductive layer for heat generation cannot be provided on the panel side for reasons such as a product purchased from a different manufacturer, only an interface requiring a reduction of adhesive strength is directly heated to cause a temperature rise, and it is thereby possible to efficiently reduce the adhesive strength and easily separate the panel from the chassis.

The present invention directly heats only a plane which requires a reduction of adhesive strength and causes the temperature thereof to rise without using any expensive member, and can thereby efficiently reduce the adhesive strength and easily separate a panel from a chassis.

In the drawings:
FIG. 1 is a cross-sectional view of a PDP of Embodiment 1 of the present invention;
FIG. 2 is an exploded perspective view showing the structure of a general PDP;
FIG. 3 is a plan view showing the structure of a general PDP module;
FIG. 4 is a cross-sectional view showing the structure of the general PDP module;
FIG. 5A is a perspective view showing Embodiment 1 of the present invention;
FIG. 5B is a cross-sectional view showing Embodiment 1 of the present invention;
FIG. 6A is a plan view showing Embodiment 2 of the present invention;
FIG. 6B is a plan view showing a roundish shape of Embodiment 2 of the present invention;
FIG. 7 is a plan view showing Embodiment 3 of the present invention;
FIG. 8 is a cross-sectional view of an adhesive material of Embodiment 4 of the present invention;
FIG. 9 is a cross-sectional view of a PDP of Embodiment 5 of the present invention; and
FIG. 10 is a perspective view of a PDP of Embodiment 6 of the present invention.

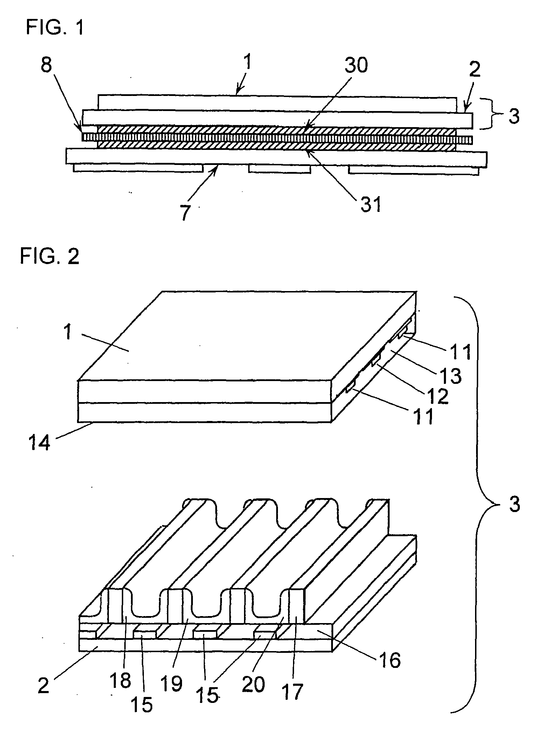

Hereinafter, embodiments of the present invention will be explained with reference to FIG. 1 to FIG. 4 using a plasma display (PDP) as an example.

FIG. 2 is an exploded perspective view showing an example of the panel structure of a PDP according to the present invention. Repetitively discharging X electrodes 11 and Y electrodes 12 are alternately arranged in parallel on a front substrate 1 made of glass. This group of electrodes is covered with a dielectric layer 13 and further the surface thereof is covered with a protection layer 14 of MgO or the like. On a rear substrate 2 made of glass as in the case of the front board, address electrodes 15 are arranged in a direction substantially perpendicular to the X electrodes 11 and Y electrodes 12 and further covered with a dielectric layer 16. Barrier ribs 17 are arranged on both sides of each address electrode 15 to partition cells in the column direction. Phosphors 18, 19, 20 which are excited by ultraviolet rays to generate visible light of red (R), green (G), blue (B) are applied to the sides of the dielectric layer 16 and barrier ribs 17 on the address electrodes 15. This front substrate 1 and the rear substrate 2 are pasted together such that the protection layer 14 and the barrier ribs 17 contact each other and a discharge gas such as Ne, Xe is sealed there in to constitute a panel 3.

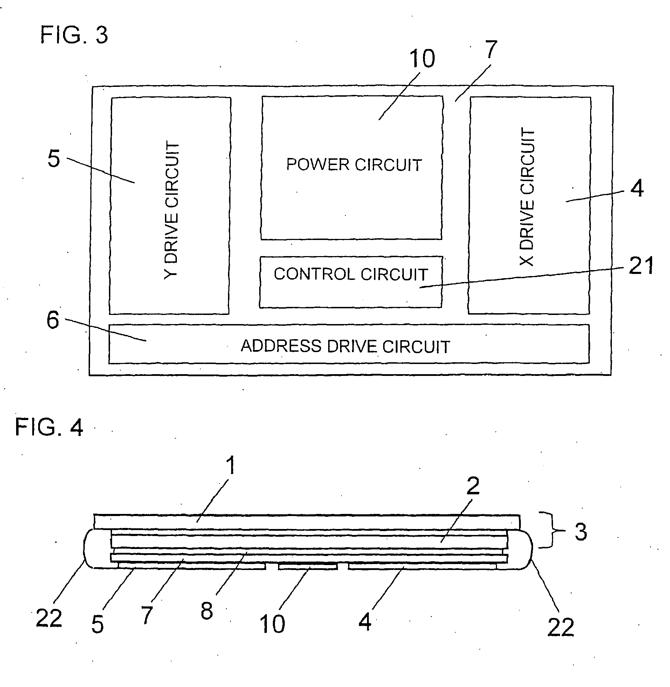

FIG. 3 is a plan view showing the structure of a general PDP module. A chassis 7 provided on the back of the rear substrate 2 of the PDP panel 3 is constructed of an X drive circuit 4 which applies a voltage to the X electrodes 11, a Y drive circuit 5 which applies a voltage to the Y electrodes 12, an address drive circuit 6 which applies a voltage to the address electrodes 15, apower supplyunit 10 fora drive circuit and a control circuit 21 which controls these components.

FIG. 4 is a cross-sectional view showing the structure of a general PDP module. The panel 3 is pasted to the chassis 7 through an adhesive material 8 on the rear substrate 2 side. As the adhesive material, one with an adhesive agent such as glue applied to an elastic base material, for example, acrylic form is used.

FIG. 1 is a cross-sectional view of the PDP module that the present invention is applied to FIG. 4. The reference numerals and presence of the same members as those shown in FIG. 4 are omitted. The panel 3 is pasted to the chassis 7 through the adhesive material 8 and an interface 30 between a panel 3 and the adhesive material 8 is provided with a conductive layer or isolation layers and a heating sheet. Furthermore, an interface 31 between the chassis 7 and the adhesive material 8 is provided with isolation layers and a heating sheet. This figure shows the principle of the present invention and presents the existence of a conductive layer or heat-generating member for both interfaces 30 and 31, but this is intended to simplify the explanation and the above described member may exist for only one of the interfaces 30 and 31.

In order to actually separate the panel from the chassis, any one of the interfaces 30 and 31 is heated so that the temperature of the interface with the adhesive material 8 is increased to 180 degrees centigrade at which the adhesive strength is reduced. Adding a peeling force to the panel and chassis in this condition can easily separate one from the other.

### [Embodiment 1]

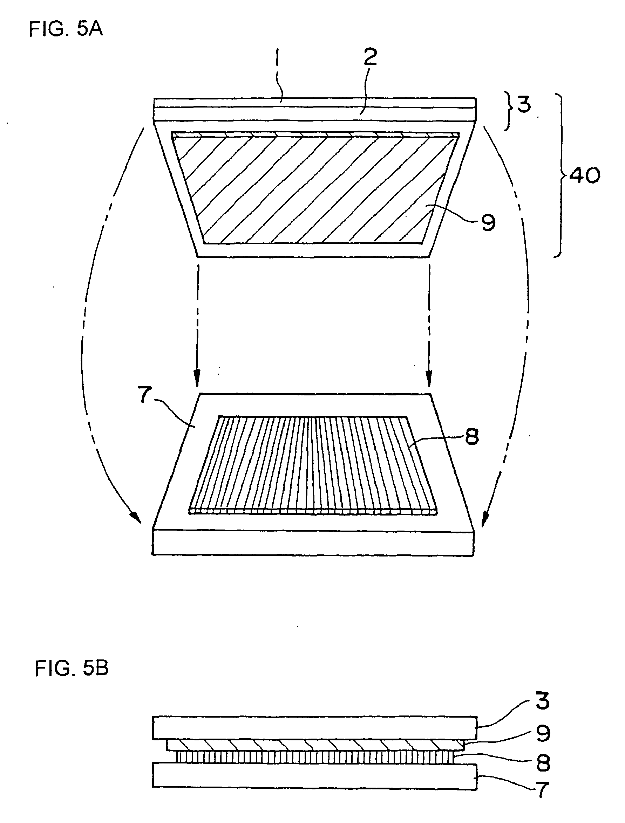

FIG. 5A and FIG. 5B show Embodiment 1 of the present invention, which are equivalent to the one with a conductive layer provided on the interface 30 side in FIG. 1. As shown in FIG. 5A, a conductive layer 9 is provided on the back of the panel 3. Here, the display of a supply terminal of a current for heat generation given from outside is omitted, but the current is supplied so as to flow from, for example, the front to the back of the conductive layer 9, as needed.

In order to heat the conductive layer 9 to a temperature of approximately 180 degree at which the adhesive strength of the adhesive material can be reduced, the material of the conductive layer 9 is preferably a conductor having large resistivity such as Nichrome carbon which is easily heated by a current given from outside, but a conductor having low resistivity such as gold, silver, copper and aluminum may also be used.

In the formation of the conductive layer 9, when Nichrome having a high melting point is used, it is best to form the conductive layer 9 to a thickness of several tens to hundreds of µm through a thin film process using vacuum evaporation or vacuum sputtering. Furthermore, also when using gold, silver, copper or aluminum having low resistivity, it is preferable to reduce the film thickness to several tens to hundreds of µm through a thin film process using vacuum evaporation or vacuum sputtering which can more easily increase resistance. Furthermore, when using carbon with high resistivity, it is best to use a thick film process using carbon paste with high workability which can easily realize a thickness of several hundreds of µm. As will be described later, even when gold, silver or copper with low resistivity or the like is used, it is possible to apply a thick film process using conductive paste by improving an application pattern.

Since the adhesion between the conductive layer formed through a thin film process or thick film process using vacuum evaporation or vacuum sput tering described here and glass which is a panel member is considerably strong compared to that of the adhesive material, it is possible to consider the glass and the conductive layer as practically molded in one piece and it is possible to handle a panel 40 with the conductive layer formed in this embodiment in the same way as that for a conventional panel and assemble a PDP module, and therefore it also has a feature of assembly that saves additional time and trouble. FIG. 5B is a final cross-sectional view thereof.

To separate the panel from the chassis in the module having such a structure, a current is supplied from a current supply terminal (not shown) to cause the conductor layer to generate heat, the temperature of the interface with the adhesive material is increased to approximately 180 degrees at which the adhesive strength of the adhesive material is reduced and the panel is then peeled away from the chassis.

When a conductive layer is provided on the interface 30 side in FIG. 1 as shown in this example, the heat conductivity of the panel is low, and therefore it is possible to realize more efficient heating than when the conductive layer is provided at a position of the chassis on the interface 31 side which is often made of metal having high heat conductivity.

### [Embodiment 2]

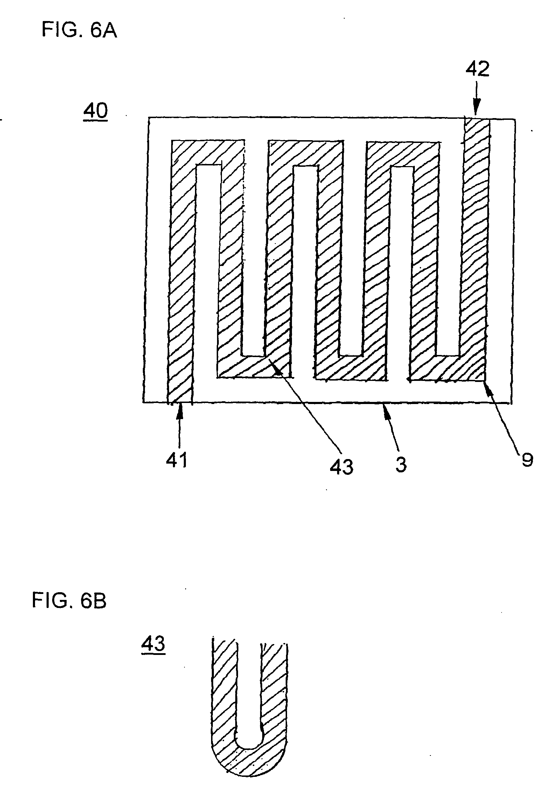

FIG. 6A and FIG. 6B show another embodiment of the present invention which corresponds to the preceding embodiment further developed. FIG. 6A shows a front view of a panel 40 with a conductive layer which is patterned so as to increase the length of a current path and so that the conductive layer 9 can be heated even if the current given from outside is reduced (the voltage given increases accordingly). In this example, the current flows from terminal 41 to 42. In this case, the conductor width becomes 1/13 and the conductor extension becomes approximately 7 times compared to the case where a current is passed from bottom up without patterning and it is thereby possible to increase the resistance value approximately 90-fold (= 13 times * approximately 7), that is, reduce the current value to approximately 1/90. Since an inflection point 43 of the pattern in the same figure has a shape liable to cause current concentration, it is also possible to adopt a roundish shape as shown in FIG. 6B to make heat generation more uniform.

To separate the panel from the chassis in the module having such a structure, a current is supplied from the terminal 41 to 42, the conductive layer is heated, the temperature of the interface with the adhesive material is increased to approximately 180 degrees at which the adhesive strength of the adhesive material is reduced and the panel is then peeled away from the chassis.

### [Embodiment 3]

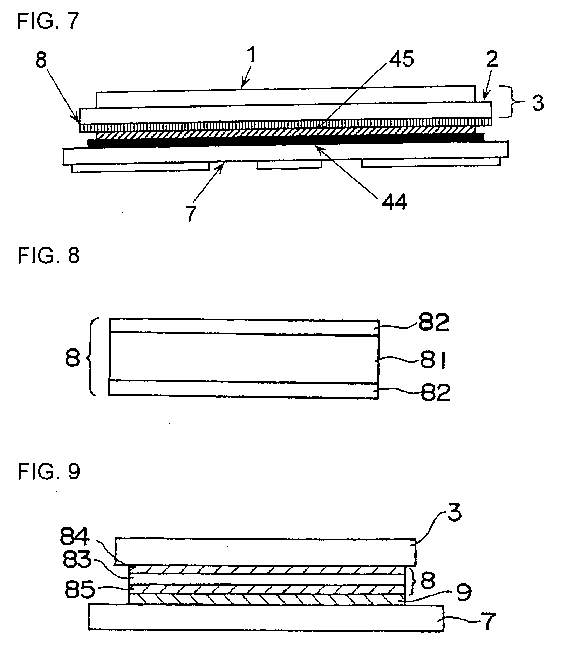

FIG. 7 is an embodiment of other means of the present invention that provides an isolation layers and a heating sheet on the chassis side. This means is used in a case where no conductive layer for heat generation can be provided on the panel side for reasons such as a product purchased from a different manufacturer or the like and corresponds to a case where isolation layers and a heating sheet are provided at a position on the interface 31 side in FIG. 1.

A heating sheet 45 is provided in contact with an adhesive material 8, which has an isolation layer 44 interposed on a chassis 7.

This embodiment directly heats only the interface whose adhesive strength needs to be reduced and causes a temperature rise, and can thereby efficiently reduce the adhesive strength and easily separate the panel from the chassis.

### [Embodiment 4]

FIG. 8 shows a cross-sectional view of an adhesive material of Embodiment 4 of the present invention.

In FIG. 8, an adhesive material 8 is constructed of a base material 81 and adhesives formed on both sides thereof. As the material of the base material 81, for example, acrylic form is used and as the material of the adhesive, for example, acryl-based adhesive such as acrylic acid ester, methacrylic acid ester or copolymer of acrylic acid ester and methacrylic acid ester or the like is used. Use of the base material 81 allows constant intensity to be added to the thin film adhesive material 8 and use of the acryl-based adhesive allows the adhesive strength during heating to be reduced.

### [Embodiment 5]

FIG. 9 shows a cross-sectional view of a PDP of Embodiment 5 of the present invention. A feature of Embodiment 5 of the present invention is that adhesive materials of different adhesive strengths are used for the front and back. In FIG. 9, an adhesive material 8 of a PDP constructed of a panel 3, the adhesive material 8, a conductive layer 9 and a chassis 7 is made up of a base material 83, a strong adhesion surface 84 and a weak adhesion surface 85. The panel 3 and the adhesive material 8 are firmly pasted together through the strong adhesion surface 84 but since they are arranged such that the weak adhesion surface 85 faces the conductive layer 9 provided on the chassis 7, and therefore when the conductive layer 9 is heated, the adhesive strength of the weak adhesion surface 85 facing the conductive layer 9 reduces, facilitating separation of the panel 3 from the chassis 7.

### [Embodiment 6]

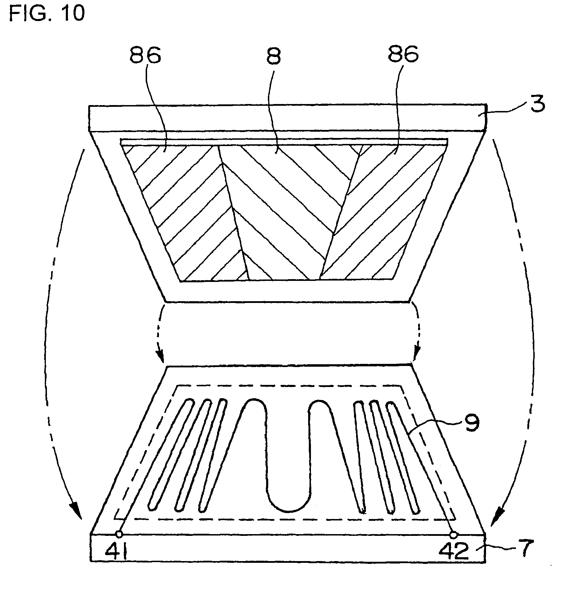

FIG. 10 shows a perspective view of a PDP according to Embodiment 6 of the present invention. A feature of Embodiment 6 of the present invention is that a heat density of a conductive layer 9 is made to vary from one position to another on the panel. When the panel 3 and chassis 7 are pasted together, their peripheral parts are easily peeled, and therefore the adhesive strength of the adhesive material in the peripheral parts maybe made stronger than that in the central part. Since the adhesive material having strong adhesive strength needs to be heatedmore strongly, the adhesive material having strong adhesive strength arranged in the peripheral parts is heated more strongly and the heat density and the temperature of the conductive layer 9 need to be higher in the peripheral parts.

When referring to FIG. 10, a normal adhesive material 8 is disposed in the center of the panel 3 and adhesive materials 86, 86 having strong adhesive strength are arranged on the right and left sides of the panel 3, which constitute the peripheral parts. In correspondence with the arrangement of the adhesive materials 86, 86 having strong adhesive strength, the conductive layer 9 is arranged on the chassis 7 such that the density of the conductive layer 9 is dense in the left and right peripheral parts and sparse in the center.

The conductive layer 9 having a normal density corresponds to the normal adhesive material 8 in the center of the panel 3 and conductive layer 9 having a high density corresponds to the adhesive materials 86, 86 having strong adhesive strength on the left and right sides of the panel 3, and in this way it is possible to reduce the adhesive strength of the adhesive material uniformly across the entire panel and facilitate separation of a large-sized PDP panel.

The above described embodiments have been explained using a PDP as an example, but the present invention is not limited to the PDP and is also applicable to other large-sized display panels such as a liquid crystal displaypanel, EL displaypanel.

Furthermore, the above described embodiments have been explained using a display panel mainly made of glass and a chassis made of metal as an example, but the materials of the display panel and the chassis are not limited to glass or metal and the present invention is also applicable to a display device provided with a flat panel and a chassis made of other materials.

Furthermore, the above described embodiments have explained different structures of a display panel, different configurations and arrangements of an adhesive material and different configurations and arrangements of a conductive layer, but it is possible to combine the structures, configurations and arrangements of these individual embodiments and use this combination for separation of a large-sized display panel.

## Claims

1. A flat panel display comprising:
a display panel;
a chassis disposed on a back side of the display panel; and
an adhesive material which adhesively holds the display panel and the chassis,
wherein a conductive layer for heating or isolation layers and a heating sheet are provided at least on the display panel side of the adhesive material or the chassis side of the adhesive material.

2. The flat panel display according to claim 1, wherein the conductive layer is provided on the back of the display panel.

3. The flat panel display according to claim 1, wherein the isolation layers and the heating sheet are provided in contact with the adhesive material between the panel and the chassis.

4. The flat panel display according to claim 1, wherein the conductive layer or the heating sheet is formed by applying a thin film process, thick film process or paste application/drying process to a conductor or resistor.

5. The flat panel display according to claim 1, wherein the conductive layer or the heating sheet is patterned in an arbitrary shape like a rectangular or zigzag shape.

6. The flat panel display according to claim 1, wherein the adhesive material comprises a base material and an adhesive formed on both sides thereof.

7. The flat panel display according to claim 1, wherein the adhesive material comprises a base material, and a strong adhesion surface and a weak adhesion surface formed on both sides thereof, and
the conductive layer or the heating sheet is disposed facing the weak adhesion surface.

8. The flat panel display according to claim 1, wherein an adhesive material is disposed in the center of the display panel, an adhesive material with strong adhesive strength is disposed in the periphery of the display panel, the conductive layer or the heating sheet is sparsely arranged opposite to the adhesive material in the center and densely arranged opposite to the adhesive material having strong adhesive strength.

9. A method of disassembling a flat panel display comprising a displaypanel, a chassis disposed on a back side of the display panel and an adhesive material which adhesively holds the display panel and the chassis, the method comprising the steps of:
energizing a conductive layer provided on the back of the display panel, causing the conductive layer to generate heat, reducing adhesive strength of an interface between the adhesive material and an adhered member with the heat and separating the display panel from the chassis.

10. A method of disassembling a flat panel display comprising a displaypanel, a chassis disposed on a back side of the display panel and an adhesive material which adhesively holds the display panel and the chassis, the method comprising the steps of:
contacting the adhesive material, causing a heating sheet having isolation layers provided between the display panel and the chassis to generate heat, reducing adhesive strength of an interface between the adhesive material and an adhered member with the heat and separating the display panel from the chassis.
